(19) Europäisches Patentamt
European Patent Office
Office européen des brevets

(11) Veröffentlichungsnummer : **0 066 122 B1**

(12) **EUROPÄISCHE PATENTSCHRIFT**

(45) Veröffentlichungstag der Patentschrift :
**15.05.85**

(51) Int. Cl.⁴ : **F 16 H 35/04**

(21) Anmeldenummer : **82104037.5**

(22) Anmeldetag : **10.05.82**

(54) **Differentialgetriebe.**

(30) Priorität : **21.05.81 DEU 8115191**

(43) Veröffentlichungstag der Anmeldung :
**08.12.82 Patentblatt 82/49**

(45) Bekanntmachung des Hinweises auf die Patenterteilung : **15.05.85 Patentblatt 85/20**

(84) Benannte Vertragsstaaten :
**AT BE CH DE FR GB IT LI LU NL SE**

(56) Entgegenhaltungen :
**DE-C- 741 812
US-A- 1 897 555
US-A- 2 651 214
US-A- 2 967 438**

(73) Patentinhaber : **Tsiriggakis, Theodoros
Kortisas 35 Botaanikos
Athen (GR)**

**Greek Powder and Cartridge Co., S.A.
1 Ilioupoleos Avenue
GR-17236 Hymettus (GR)**

(72) Erfinder : **Tsiriggakis, Theodoros
Kortisas 35 Botaanikos
Athen (GR)**

(74) Vertreter : **Ruschke, Hans Edvard et al
Patentanwälte Dipl.-Ing. Olaf Ruschke Dipl.-Ing. Hans
E. Ruschke Dipl.-Ing. Jürgen Rost Dipl.-Chem. Dr. U.
Rotter Pienzenauerstrasse 2
D-8000 München 80 (DE)**

**Beschreibung**

Die vorliegende Erfindung betrifft ein Differentialgetriebe der im Oberbegriff des Patentanspruches 1 genannten Art. Die US-A-1 897 555 zeigt ein solches Getriebe, welches unter Ausnutzung des Prinzips der schiefen Ebene einen Drehzahlausgleich zwischen zwei Achsen erreicht, etwa den Achsen der beiden Antriebsräder eines Kraftfahrzeuges oder eines Kettenfahrzeuges. Derartige Getriebe können in allen den Fällen eingesetzt werden, in denen übliche Differential- oder Ausgleichsgetriebe aus Zahnrädern Anwendung finden.

Es ist ein wesentlicher Nachteil dieses gattungsbildenden Standes der Technik, daß aufgrund der mangelhaften Lagerung der Wälzkörper im Kraftübertragungselement bzw. Kronenrad eine erhebliche Reibung bei der Übertragung der Kräfte von dem Kronenrad auf die Wälzkörper auftritt. Die Kraftübertragung erfolgt, indem die Wälzkörper von dem als Käfig wirkenden Kronenrad in Umfangsrichtung geschoben werden, was durch Kontakt der Umfangsflächen der Wälzkörper mit den Seitenflächen der Ausnehmungen im Kronenrad geschieht. Da die Wälzkörper senkrecht zur Rotationsebene des Kronenrades in Richtung seiner Achse auf- und niederbewegt werden, kommt es zu sehr ungünstigen Reibungsverhältnissen zwischen dem Wälzkörper und dem als Käfig wirkenden Kronenrad.

Hiernach wird es als die der vorliegenden Erfindung zugrundeliegende Aufgabe angesehen, das gattungsgemäße Differentialgetriebe derart weiterzubilden, daß seine Lebensdauer und Funktion erheblich verbessert wird. Insbesondere soll die Reibung in dem Differential vermindert und ein besonders ruhiger Lauf erreicht werden. Diese Aufgabe wird durch die Lehre des Patentanspruches 1 gelöst. Die Kraftübertragung vom Kronenrad bzw. Kraftübertragungselement erfolgt durch die senkrecht zur Rotationsebene des Kraftübertragungselementes verschieblichen Drehlagerungselemente, die im dargestellten Ausführungsbeispiel aus einem Führungs- und Gleitstück bestehen, welche auf der einen Seite als Keilfläche und auf der anderen Seite als Kegelfläche ausgebildet sind. Durch diese in Axialrichtung des Kronenrades verschiebliche Drehlagerung, welche konstruktiv ohne weiteres auch anders ausgebildet werden kann, gelingt es, die Kräfte sehr viel eleganter als bisher vom Kronenrad oder Käfig auf die Wälzkörper zu übertragen, welche die Kraft ihrerseits an die Nockenbahnteller weitergeben. Durch diese besondere Art der Lagerung wird also ein ganz erheblich verbessertes Ausgleichs- oder Differentialgetriebe geschaffen.

Diesen grundsätzlichen Vorteil weist der Erfindungsgegenstand auch gegenüber ähnlichen, nachfolgend abgehandelten Differentialgetrieben auf, die darüber hinaus in weiterer Hinsicht nachteilig sind.

Das Ausgleichsgetriebe nach der DE-PS-741 812 weist eine gegenüber dem nächstliegenden Stand der Technik noch wesentlich erhöhte Reibung auf, weil zusätzlich zu den dort vorhandenen Nachteilen auch noch diejenige Reibung in Betracht gezogen werden muß, die sich aufgrund der Verwendung von Gleitsteinpaaren ergibt. Diese in Axialrichtung der Nockenbahnteller hin- und herverschieblichen Gleitsteine reiben nicht nur an dem sie führenden Käfig, sondern auch aneinander. Schließlich entsteht ein ganz wesentlicher weiterer Reibungsanteil durch den Kontakt mit den Kurvenbahnen, auf denen die Gleitsteine entlanggleiten und nicht etwa abrollen. Im übrigen kann es zu ganz beachtlichen Flächenpressungen kommen, da der Übergangspunkt zwischen zwei Kurvenabschnitten punktförmig auf die Gleitflächen der jeweiligen Gleitsteine drückt.

Bei dem Differentialgetriebe nach der US-PS-2 651 214 kann der Nachteil der erhöhten Flächenpressung in der gleichen Weise erfolgen, auch wenn hierbei keine Gleitsteine sondern Kegelrollen verwendet werden, die aber ebenfalls von dem zugehörigen Käfig ohne jede Drehlagerung in Umfangsrichtung geschoben werden.

Letzteres gilt auch für die als Kugeln ausgebildeten Wälzkörper bei dem Ausgleichsgetriebe gemäß der US-PS-2 967 438, so daß sich auch hierbei ähnlich wie beim gattungsbildenden Stand der Technik eine erhebliche Reibung einstellt.

Bei der erfindungsgemäßen Lösung ist es besonders vorteilhaft, die zwei einander axial gegenüberstehenden Nockenbahnteller identisch ausgebildet sind. Dadurch wird eine besonders einfache Fertigung möglich.

Durch die vorliegende Erfindung wird ein neuartiges Differentialgetriebe angegeben, welches das gattungsbildende Differentialgetriebe zu einem praktisch nutzbaren und einsatzfähigen System weiterentwickelt, welches in mancherlei Hinsicht auch den heute üblichen Differentialgetrieben aus Zahnrädern überlegen ist.

Bei einer Anwendung in einem Automobil verhält es sich bei einer Geradeausfahrt auf trockener Straße wie ein herkömmliches Differential, d. h. die Leistung wird gleichmäßig auf alle Räder verteilt. Auch bei einer Kurvenfahrt auf trockener Straße verhält es sich wie ein normales Differential, d. h. das äußere Rad legt einen größeren Weg zurück als das innere. Wenn jedoch das eine Rad keinen Widerstand antrifft, etwa auf Glatteis, andererseits das andere Rad einen normalen Widerstand antrifft, so versagt das herkömmliche Differential, weil das eine Rad mit der doppelten Drehzahl durchdreht, während das andere Rad stillsteht. Das vorliegende neuartige Differential ist in dieser Situation überlegen, weil beide Räder mit der gleichen Drehzahl drehen, d. h. daß das Fahrzeug trotzdem losfahren kann. Und zwar ist dies möglich, weil zwischen den beiden Nockenbahntellern durch die Wälzkörper ein axialer Druck ausgeübt wird, der das gleiche Moment auf beide Räder bringt.

Ein Ausführungsbeispiel der vorliegenden Erfindung wird unter Bezugnahme auf die beigefügten Zeichnungen näher beschrieben. In diesen zeigt :

Figur 1 einen Schnitt durch das Differentialgetriebe in einer bevorzugten Ausführungsform ;

Figur 2 einen senkrechten Schnitt durch die Mittelebene in Fig. 1 ;

Figur 2a einen ähnlichen Schnitt durch eine alternative Ausführungsform ;

Figur 3 die Anordnung und genaue Ausbildung der Wälzkörper im Getriebe ;

Figur 4 eine Abwicklung der Nockenbahnen einer der beiden identisch ausgebildeten Nockenbahnteller des Differentialgetriebes ;

Figur 5 eine Seitenansicht eines Nockentellers ;

Figur 5a eine Seitenansicht eines Nockentellers mit nicht gegeneinander phasenverschobenen Nockenbahnen,

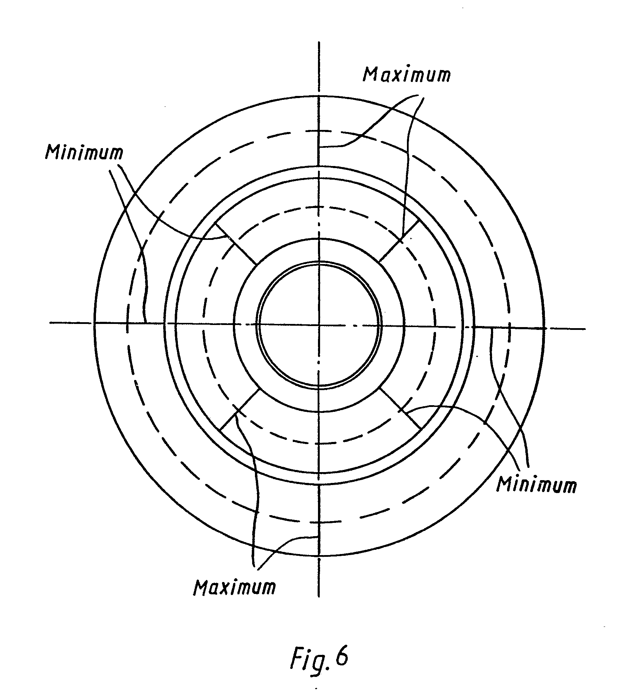

Figur 6 eine Draufsicht derselben und

Figur 7 eine Anwendungsform des erfindungsgemäßen Getriebe zur Veränderung der Ausgangsdrehzahl, z. B. als Schalt- und Untersetzungsgetriebe.

Im Nachfolgenden wird ein Ausführungsbeispiel mit 4 Wälzkörpern pro Nockenbahn beschrieben. Es liegt aber auf der Hand, daß mehr oder weniger Wälzkörper pro Nockenbahn vorgesehen sein können, wenn die Nockenbahnen entsprechend abgewandelt werden.

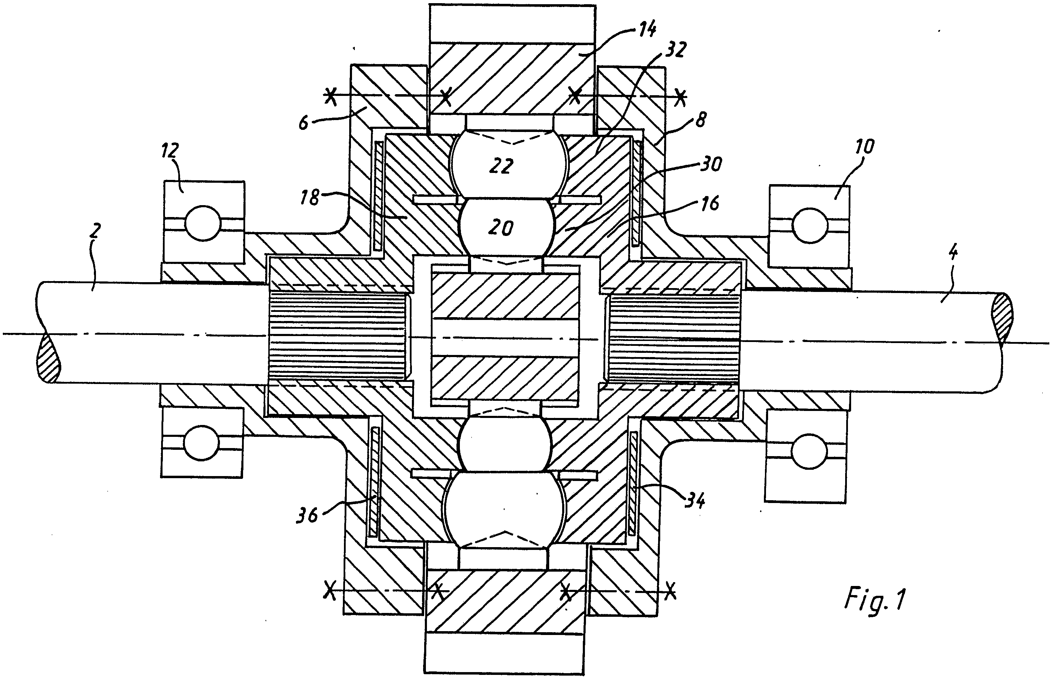

In Fig. 1 sind die beiden Achsen 2, 4 dargestellt, die durch das Differentialgetriebe angetrieben werden sollen und deren Drehbewegung wie bei einem üblichen Differentialgetriebe gegeneinander ausgeglichen werden sollen. Die Achsen 2, 4 sind durch zwei Gehäusehälften 6, 8 des Differentialgetriebes hindurchgeführt, welche Gehäusehälften ihrerseits über Gleit- oder Wälzlager 10, 12 in einem nicht näher dargestellten Gehäuse gelagert sind. Die Gehäusehälften 6, 8 sind ihrerseits mit einem Kraftübertragungselement, z. B. einem Kronen- oder Zahnrad 14 fest verbunden oder verschraubt, wobei auf das Kraftübertragungselement in der üblichen Weise die Leistung des Antriebsmotors gegeben wird, um das Differentialgetriebegehäuse insgesamt in Drehung zu versetzen.

Die beiden Achsen 2, 4 sind an ihrem inneren Ende wie in der Zeichnung dargestellt mit einer Keilwellenverzahnung versehen, die in entsprechend ausgebildete Keilwellenverzahnungen im Zentrum von Nockenbahntellern 16, 18 eingesetzt sind. Andere Arten der Verbindung können auch verwendet werden. Diese Nockenbahnteller sind an den einander zugewandten Stirnflächen mit jeweils einer inneren und einer äußeren, in axialer Richtung weisenden Nockenfläche oder -bahn versehen, die jeweils zur Aufnahme von noch näher zu beschreibenden Wälzkörpern konkav ausgeführt sind bzw. bei entsprechend geformten Wälzkörpern auch andere Querschnitte haben können. Diese Nockenbahnen sind wie dargestellt konzentrisch zur Achse des Getriebes angeordnet.

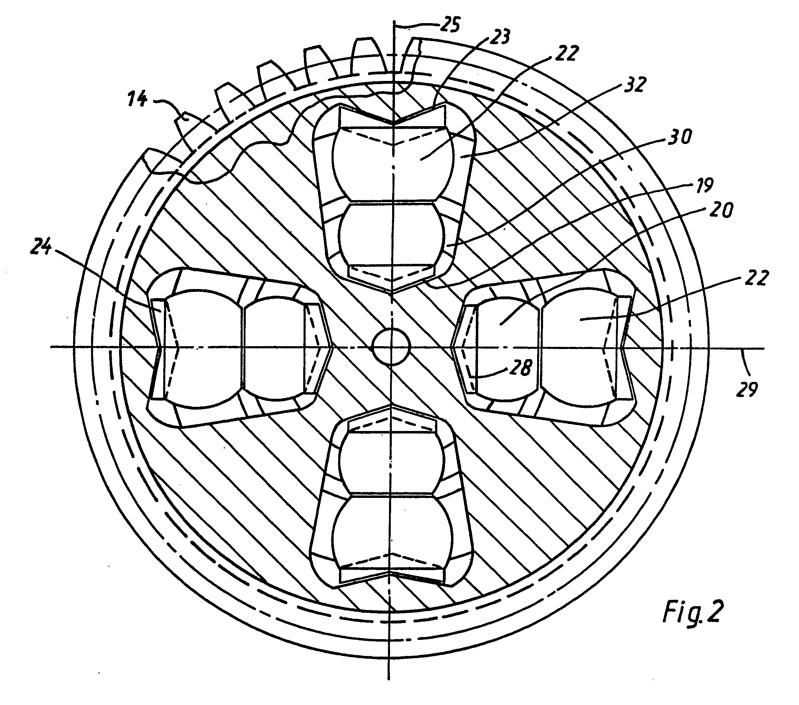

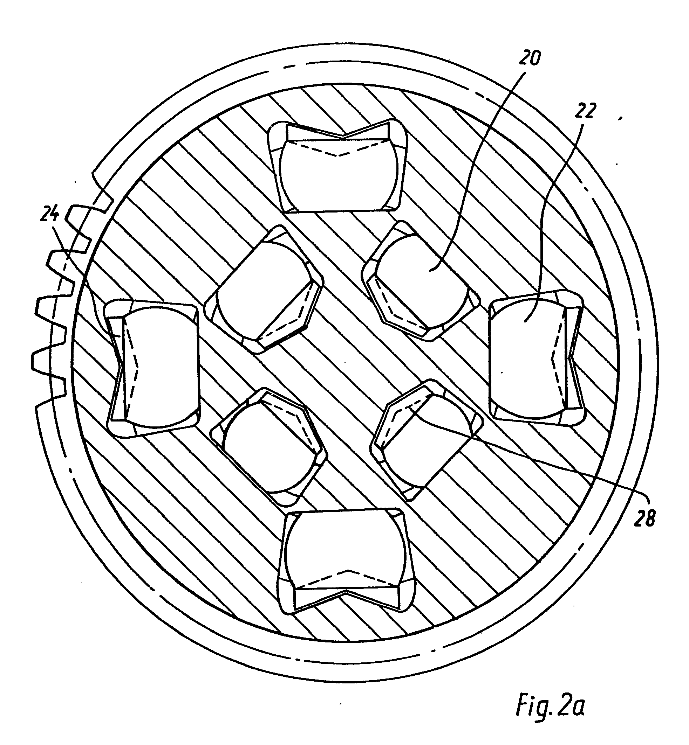

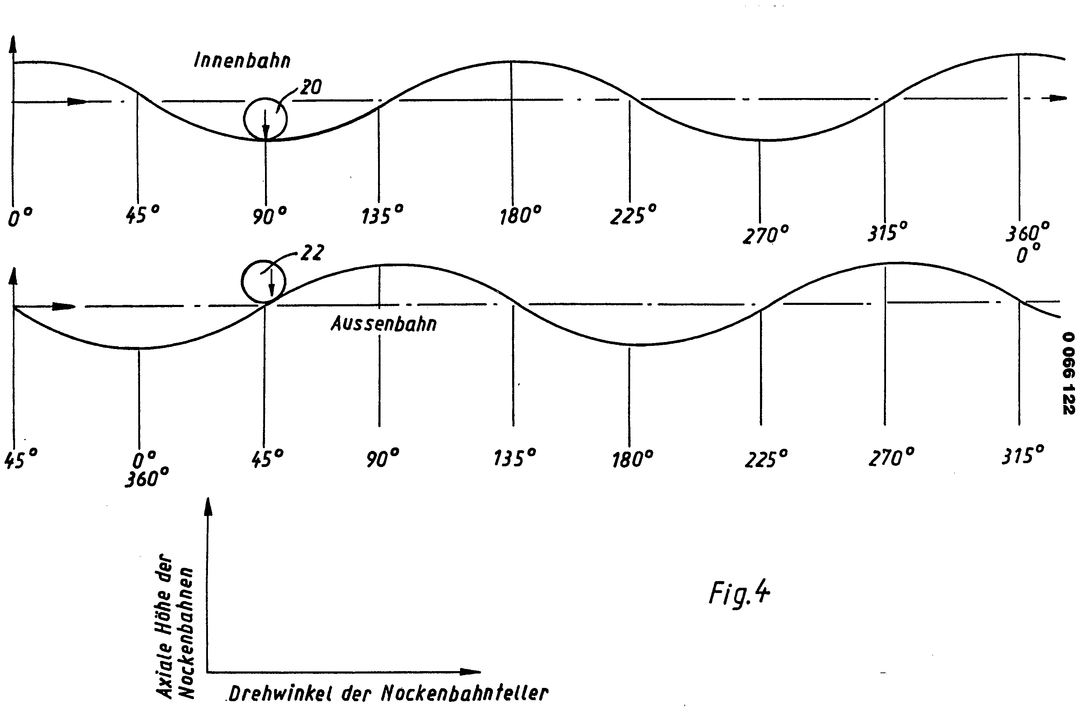

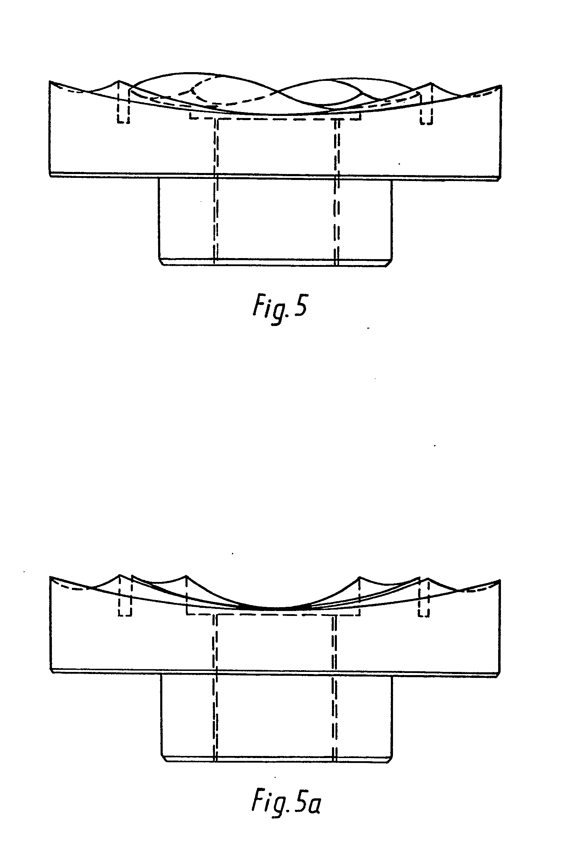

In Fig. 4 ist jeweils eine Abwicklung der Nockenbahnen dargestellt. Wie ersichtlich ist die Höhe jeder Nockenbahn in axialer Richtung gesehen variabel ausgebildet, nämlich etwa wie zwei aufeinanderfolgende Sinuskurven, die auf dem Umfang von 360° (der Nockenbahnteller) verteilt sind. Dabei ist die innere Nockenbahn gegenüber der äußeren Bahn phasenverschoben, z. B. um 45°, d. h. bei einer Drehung des Nockenbahntellers um ihre eigene Achse (um die in Fig. 1 dargestellte Rotationsachse) läuft ein Maximum der inneren Nockenbahn in Umfangsrichtung gesehen später, z. B. um 45°, an einem festen vorgegebenen Punkt vorbei als ein Maximum der äußeren Nockenbahn. Alternativ wäre es auch möglich, die Nockenbahnen nicht phasenverschoben anzuordnen, dann müssen aber die einander zugeordneten, inneren und äußeren Wälzkörper gegeneinander versetzt sein, z. B. um 45°. Eine solche Alternative ist in Fig. 2a bzw. Fig. 5a angedeutet.

Wie aus der Fig. 1 ersichtlich, stehen die beiden Nockenbahnteller 16 und 18 einander gegenüber, wobei der Raum zwischen den inneren und äußeren Nockenbahnen gerade von kleinen bzw. großen Wälzkörpern 20 bzw. 22 ausgefüllt wird. Diese Wälzkörper sind im Ausführungsbeispiel in etwa tonnenförmig ausgeführt und deren gegebenenfalls über eine reibungsvermindernde Zwischenlage aneinander anliegenden Stirnflächen sind plan geschliffen, so daß die Wälzkörper sich einerseits gegeneinander verdrehen können, andererseits aber auch quer zur Drehachse gegeneinander verschoben werden können, nämlich in der Darstellung der Fig. 2 vertikal zur Zeichenebene.

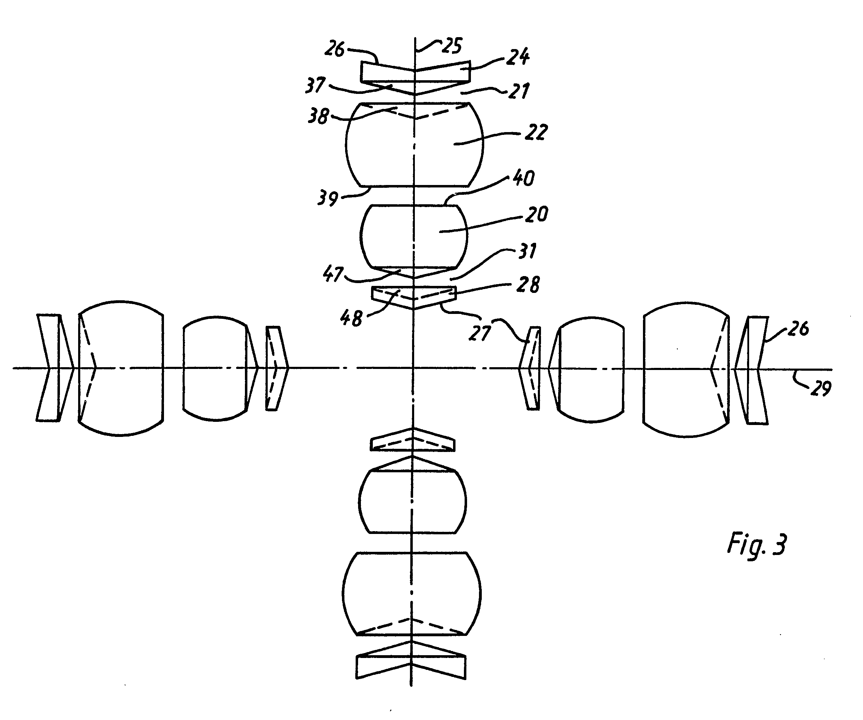

Um sicherzustellen, daß die Wälzkörper sich einerseits um ihre Drehachse drehen können, die jeweils in Fig. 2 oder 3 eingezeichnet ist, andererseits aber wie erläutert senkrecht zur Zeichenebene der Fig. 2 verschoben werden können, weist jeder große Wälzkörper 22 auf seiner der plan geschliffenen Stirnfläche abgewandten Seite einen Innenkegel 38 auf, in den ein mit einem entsprechenden Außenkegel 37 versehenes Führungs- oder Gleitstück 24 eingesetzt ist. Hierdurch wird die Drehlagerung 21 ausgebildet. Dieses Führungsteil 24 ist auf seiner nach außen liegenden Stirnfläche mit einer Geradführung 23 in Form einer V-förmigen Nut 26 und einer entsprechenden Keilfläche als Gegenlager versehen, wie dies aus Fig. 2 und 3 ersichtlich ist. Diese V-förmige Nut verläuft senkrecht zur Zeichenebene. Durch diese Lagerung des großen Wälzkörpers 22 kann er sich einerseits um seine eigene Achse 25 bzw. 29 drehen, andererseits kann er aber auch senkrecht zur Zeichenebene verschoben werden, nämlich entsprechend der Ausrichtung der V-förmigen Nut 26 am Führungsstück 24. Dieses Führungsstück 24 stützt sich im übrigen innen am Kraftübertragungselement, d. h. am Kronenrad 14 ab, welches dort mit einer entsprechenden V-förmigen Führung 23 versehen ist.

Der kleine Wälzkörper 20 ist in praktisch identischer Weise innen im Zentrum des Kronenrades abgestützt, d. h. im Bereich der Nabe desselben, nämlich durch ein vergleichbar ausgestaltetes Führungs- und Gleitstück 28. Der kleine Wälzkörper 20 ist an der nach innen weisenden Stirnfläche mit einem Außenkegel 47 versehen, welcher in einen Innenkegel 48 im genannten Gleitstück 28 eingreift und so die Drehlagerung 31 ausbildet. Das Gleitstück 28 ist wiederum auf der nach innen weisenden Fläche mit einer V-förmigen Keilfläche 27 versehen, die in einer entsprechenden Führungsnut im Zentrum oder in der Nabe des Kronenrades 14 abgestützt ist.

Die Drehlagerung und Geradführung kann auch durch anders ausgebildete Führungsstücke 24, 28 erreicht werden. Beispielsweise kann die Lage der Innen- und Außenkegel vertauscht werden, ebenso die der V-förmigen Nut bzw. Keilfläche. Die zur Drehlagerung und Geradführung dienenden Bauteile können im übrigen durch gleichwirkende andere konstruktive Elemente ersetzt werden.

Durch die beschriebene Lagerung der Wälzkörper 20 und 22 können diese sich unabhängig voneinander in Fig. 2 gesehen senkrecht zur Zeichenebene auf und nieder bewegen, und zwar entsprechend der Ausgestaltung der Nockenbahnen, deren Abwicklung in Fig. 4 gezeigt ist. Hierbei ist zu beachten, daß die Wälzkörper 22, 20, von denen im Ausführungsbeispiel jeweils vier um 90° gegeneinander versetzt vorgesehen sind, durch die dargestellte Lagerung mit Hilfe der Gleitstücke 24 und 28 daran gehindert sind, eine andere Anordnung als um 90° zueinander versetzt einzunehmen. Diese Anordnung der kleinen und großen Wälzkörper 20, 22, die auf die inneren und äußeren Nockenbahnen 30 bzw. 32 einwirken, ist besonders gut aus der Fig. 2 ersichtlich.

Wenn das Kraftübertragungselement, d. h. das Rad 14 durch den Antrieb in Drehung versetzt wird, dreht sich notwendigerweise auch das jeweils aus vier kleinen bzw. großen Wälzkörpern 20, 22 und den Gleit- oder Führungsstücken 24 und 28 gebildete « Kreuz » der Fig. 2. Da die inneren und äußeren Nockenbahnen 30 bzw. 32 in axialer Richtung auf dem Umfang verteilt unterschiedliche Höhen haben, wie dies in Fig. 4 dargestellt ist, außerdem auch noch jeweils um 45° gegeneinander phasenverschoben sind, ergibt sich, wenn beide Achsen 2, 4 den gleichen Widerstand antreffen, ein gleichmäßiger Antrieb für diese beiden Achsen, wie dies bei herkömmlichen Differentialgetrieben ebenfalls der Fall ist. Sobald durch eine Kurvenfahrt das innere Rad des Fahrzeuges einen kürzeren Weg zurückzulegen hat als das äußere Rad des Fahrzeuges, ergibt sich eine Ausgleichsbewegung zwischen den beiden Nockenbahntellern dieses neuartigen Differentialgetriebes. Die Kraftverteilung zwischen den beiden Achsen 2, 4 geschieht mit Hilfe der in Fig. 2 gesehen vertikal beweglichen großen bzw. kleinen Wälzkörper 22, 20, die auf die Nockenbahnen 32, 30 wie auf eine schiefe Ebene einwirken. Dieses Prinzip der Ausgleichsbewegung zwischen den Achsen kann auch auf alle möglichen anderen Anwendungsfälle übertragen werden. So kann dieses Getriebe ganz allgemein als ein Summengetriebe eingesetzt werden, d. h. die in das Getriebe eingeführten Drehzahlen werden summiert oder subtrahiert und auf die Ausgangswelle gegeben. Bei dieser Ausgleichsbewegung kann es durch die Phasenverschiebung der inneren und äußeren Nockenbahnen um 45° niemals zu einem toten Punkt kommen, bei dem der axial gerichtete Druck aller Wälzkörper gleichzeitig auf eine senkrecht dazu verlaufende Ebene drückt, d. h. entweder auf das Minimum oder das Maximum der zugehörigen, sinusförmig gestalteten Nockenbahn. Denn die jeweils andere Nockenbahn befindet sich zu diesem Zeitpunkt (im Totpunkt der ersten Nockenbahn) relativ zum anderen Wälzkörper gerade so, daß der axial gerichtete Druck auf den Punkt der größten Steigung der Nockenbahn wirkt. Demzufolge bewirkt der zwischen den beiden Nockenbahntellern 16, 18 über die Wälzkörper 20, 22 gegenseitig ausgeübte Axialdruck eine Verteilung der Leistung bzw. der Drehzahlen auf die beiden Achsen 2, 4.

Gleichzeitig mit ihrer in axialer Richtung erfolgenden Hin- und Herbewegung führen die Wälzkörper 20, 22 eine Drehbewegung aus, d. h. sie rollen auf den Nockenbahnen ab, was zur Verringerung der Reibung führt. Zur weiteren Reibungsverminderung ist zwischen den Gehäuseteilen 6, 8 und den Nockenbahntellern 16, 18 jeweils eine reibungsvermindernde Scheibe 34, 36 eingelegt, die auf ihren Stirnflächen mit spiralförmig verlaufenden Nuten bzw. achsparallelen Durchführungen versehen ist, was zur gleichmäßigen Verteilung eines Schmiermittels in allen Bereichen des Differentialgetriebes beiträgt.

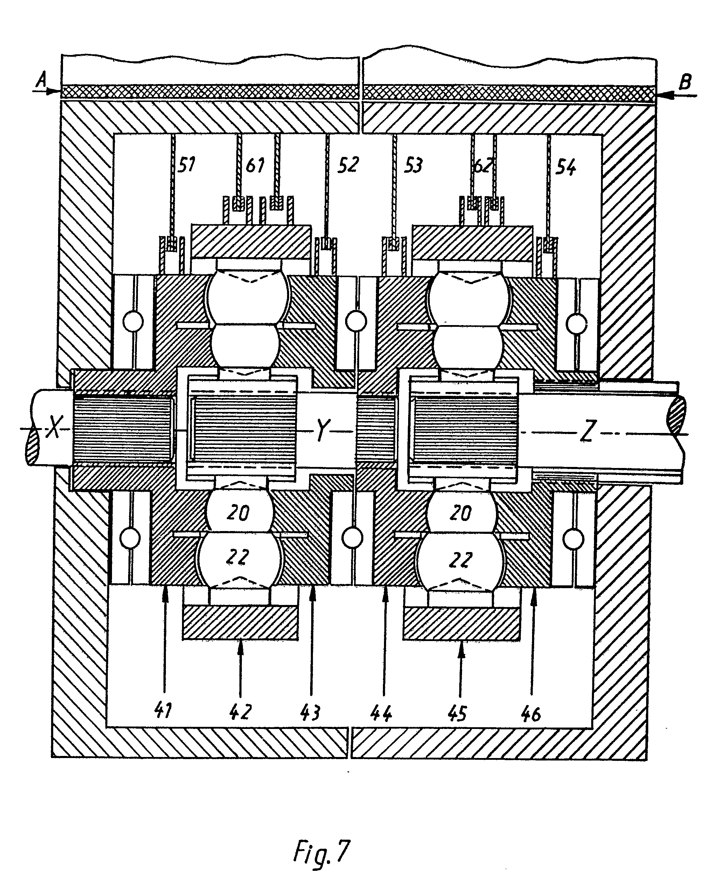

Das soweit beschriebene Getriebe kann auch als Untersetzungs- oder Übersetzungsgetriebe eingesetzt werden. Wenn beispielsweise an der einen Achse die Eingangsdrehzahl n ist, dann ist an der anderen Achse die Ausgangsdrehzahl n/2. In Figur 7 ist eine beispielsweise Anwendungsform des erfindungsgemäßen Getriebes als Schalt- und Übersetzungsgetriebe gezeigt. A und B zeigen prinzipiell Bremsen, die dazu geeignet sind, die Gehäusehälften des Getriebes wahlweise festzulegen bzw. freizugeben. Mit 51 bis 54 bzw. 61 und 62 sind weitere Bremsen bezeichnet, die dazu dienen, wahlweise die verschiedenen Nockenbahnteller bzw. die Räder festzulegen, die dem Rad 14 aus der Fig. 1 oder 2 entsprechen.

Wenn die Bremsen A und B und die Bremsen 52 und 54 angezogen sind und auf die Achse X die Drehzahl n gegeben wird, so erteilt der mit der Achse X verbundene Nockenbahnteller 41 über die Wälzkörper 20, 22 dem Rad 42 eine Drehbewegung, die an der Achse Y abgenommen wird. Diese Drehbewegung ist n/2. Das gleiche wiederholt sich bei dem nächsten Aggregat, so daß dann an der Achse Z die Drehzahl n/4 auftritt.

Für den nächsten Fall sei angenommen, daß die erste Getriebeeinheit (in Fig. 7 die linke) in der gleichen Weise arbeitet, wie im zuvor beschriebenen Fall. Dann macht die Welle Y wiederum eine Umdrehung von n/2. Für die zweite Getriebeeinheit (in Fig. 7 die rechte) sei angenommen, daß die Bremsen B und 62 angezogen sind, wobei die Bremsen 53 und 54 freigegeben sind, und daß die Achse Z statt mit dem Zentrum des Rades 45 mit dem Nockenbahnteller 46 verbunden ist, ähnlich der Verbindung der Achse X mit dem Nockenbahnteller 41. Dann arbeitet das Getriebe in der Weise, daß die Drehzahl n/2 der Achse Y in eine gleiche, aber entgegengesetzte Drehzahl der Achse Z übersetzt wird.

Als weiterer Fall sei angenommen, daß die Bremse A angezogen aber die Bremsen B, 51 und 61 freigegeben sind und außerdem die Bremsen 52, 53, 62 und 54 angezogen sind. In diesem Fall erscheint wiederum ausgehend von einer Drehzahl n an der Achse X an der Achse Y eine Drehzahl n/2. Nachdem aber die ganze rechte Getriebeeinheit aufgrund der festgestellten Bremsen 53, 62 und 54 wie ein starrer Körper wirkt, ergibt sich an der Achse Z die Drehzahl n/2.

Schließlich können beide Bremsen A und B freigegeben sein, andererseits alle anderen Bremsen 51 bis 54 und 61 und 62 angezogen sein. Dann wird die Drehzahl n an der Achse X unverändert an die Achse Z weitergegeben.

**Patentansprüche**

1. Differentialgetriebe mit einem Kraftübertragungselement, z. B. Kronenrad (14, Fig. 1), welches die von dem Antriebsmotor kommende Drehbewegung über eine Getriebeverbindung auf zwei Achsen verteilt, mit zwei einander axial gegenüberstehenden Nockenbahntellern (16, 18, Fig. 1), die koaxial zum Kraftübertragungselement und relativ dazu verdrehbar angeordnet sowie mit den Achsen (2, 4, Fig. 1) verbunden sind, wobei jeder Nockenbahnteller (16, 18) auf den einander zugewandten Flächen mindestens eine Nockenbahn aufweist, die in axialer Richtung gesehen auf dem Umfang verteilt eine variable Höhe aufweist, und mit mindestens zwei pro Nockenbahn (30, 32) beider Nockenbahnteller (16, 18) abrollenden Wälzkörpern (20, 22, Fig. 1), die jeweils in einer Ausnehmung in dem Kraftübertragungselement, z. B. Kronenrad (14) angeordnet sind, wobei die Drehachse jedes Wälzkörpers radial zum Kraftübertragungselement verläuft und jeder Wälzkörper gleichzeitig quer zu seiner Drehachse verschieblich ist, dadurch gekennzeichnet, daß die Wälzkörper mittels eines senkrecht zur Rotationsebene des Kraftübertragungselementes (14) verschieblichen Drehlagerungselementes (Führungs- und Gleitstück 24, 28) mit dem Kraftübertragungselement (14) verbunden sind.

2. Differentialgetriebe nach Anspruch 1, dadurch gekennzeichnet, daß die zwei einander axial gegenüberstehenden Nockenbahnteller (16, 18, Fig. 1) identisch ausgebildet und auf den einander zugewandten Flächen der Nockenbahnteller mindestens eine innere (30) und eine äußere (32) Nockenbahn vorgesehen sind.

3. Differentialgetriebe nach Anspruch 1 oder 2, dadurch gekennzeichnet, daß die eine Stirnseite (39, 40) eines jeden Wälzkörpers (22, 20) eben ist, während die gegenüberliegende Stirnseite mit einem Führungs- und Gleitstück (24, 28) zusammenwirkt, welches sowohl eine Geradführung (23, 19, Fig. 2) als auch eine Drehlagerung (21, 31) der Wälzkörper (22, 20) darstellt.

4. Differentialgetriebe nach Anspruch 3, dadurch gekennzeichnet, daß jede Geradführung (19, 23) als V-förmige Nut- bzw. Keilfläche (27, 26) ausgebildet ist und jede Drehlagerung (31, 21) einen Innenkegel (48, 38) bzw. einen Außenkegel (47, 37) aufweist.

5. Differentialgetriebe nach einem der Ansprüche 3 bis 4, dadurch gekennzeichnet, daß die beiden Wälzkörper (22, 20) sich mit ihren ebenen Stirnseiten (39, 40) aneinander oder am Kraftübertragungselement (14) abstützen, gegebenenfalls über eine reibungsvermindernde Zwischenlage.

6. Differentialgetriebe nach einem der Ansprüche 3 bis 5, dadurch gekennzeichnet, daß jedes Führungs- und Gleitstück (24, 28) sich mit jeder V-förmigen Nut- bzw. Keilfläche (26, 27) gegen das Kraftübertragungselement (14) und über die Drehlagerung (21, 31) gegen die entsprechende Stirnseite der Wälzkörper abstützt.

7. Differentialgetriebe nach einem der Ansprüche 3 bis 6, dadurch gekennzeichnet, daß der Außenkegel (37, 47) der Drehlagerung (21, 31) entweder an dem Führungsstück (24 bzw. 28) oder am Wälzkörper (22 bzw. 40) ausgebildet ist.

8. Differentialgetriebe nach einem der voranstehenden Ansprüche, dadurch gekennzeichnet, daß die Form der Wälzkörper rotationssymmetrisch, d. h. tonnenförmig, zylindrisch oder dergleichen ist und die Nockenbahnteller im Querschnitt entsprechend ausgebildet sind.

9. Differentialgetriebe nach einem der voranstehenden Ansprüche, dadurch gekennzeichnet, daß die Nockenbahnen (30, 32) auf beiden Nockenbahntellern (16, 18) wie zwei aufeinanderfolgende Sinuskurven gestaltet und auf jedem Teller (16, 18) die innere Bahn gegenüber der äußeren Bahn phasenverschoben ist, z. B. um jeweils 45°.

10. Differentialgetriebe nach einem der Ansprüche 1 bis 8, dadurch gekennzeichnet, daß die Nockenbahnen auf beiden Nockenbahntellern (16, 18) wie zwei aufeinanderfolgende Sinuskurven gestaltet sind, die nicht phasenverschoben sind, wobei die auf der inneren und äußeren Nockenbahn abrollenden Wälzkörper einen Winkelabstand zueinander aufweisen, z. B. jeweils 45°.

11. Differentialgetriebe nach einem der voranstehenden Ansprüche, dadurch gekennzeichnet, daß insgesamt je vier Wälzkörper oder eine andere beliebige Zahl (20, 22) auf jeder Nockenbahn bzw. im Kraftübertragungselement angeordnet sind und deren Drehachse um 90° oder einen anderen Winkel gegeneinander versetzt sind.

12. Verwendung eines oder mehrerer Differentialgetriebe nach einem der voranstehenden Ansprüche in einem Schalt- bzw. Über/ Untersetzungsgetriebe.

## Claims

1. A differential gear having a power transmission element, e. g., a crown gear (14, Fig. 1) which allocates the rotary motion coming from the drive motor via a gear connection to two shafts, having two cam track plates (16, 18, Fig. 1) confronting each other axially, said cam track plates (16, 18, Fig. 1) being arranged such as to rotate coaxially to the power transmission element and relatively thereto and being connected to the shafts (2, 4, Fig. 1), each cam track plate (16, 18) having at least one cam track on the surfaces turned toward each other, said cam track having, viewed in axial direction, a variable height distributed over the circumference and having at least two rolling elements (20, 22, Fig. 1) for every cam track (30, 32) of both cam track plates (16, 18), said rolling elements (20, 22, Fig. 1) each being mounted in a recess in the power transmission element, e. g., a crown gear (14), the axis of rotation of each rolling element running radially to the power transmission element and each rolling element at the same time sliding perpendicularly to its axis of rotation, characterized in that the rolling elements are connected to the power transmission element (14) by means of a pivot bearing element (guide piece and slide piece 24, 28) that moves vertically to the plane of rotation of the power transmission element (14).

2. The differential gear as set forth in Claim 1, characterized in that the two cam track plates (16, 18, Fig. 1) which confront each other axially are designed in identical fashion and at least one inner (30) and one (32) outer cam track is provided on the surfaces of the cam track plate turned toward one another.

3. The differential gear as set forth in Claim 1 or 2, characterized in that one front end (39, 40) of each rolling element (22, 20) is plane, while the opposite front end coacts with a guide and slide piece (24, 28) which represents both a slide guide (23, 19, Fig. 2) and a pivot bearing (21, 31) of the rolling elements (22, 20).

4. The differential gear as set forth in Claim 3, characterized in that each slide guide (19, 23) is formed as a V-shaped groove or wedge surface (27, 26) and each pivot bearing (31, 21) has an inner cone (48, 38) or an outer cone (47, 37).

5. The differential gear as set forth in either Claim 3 or 3, characterized in that the two rolling elements (22, 20) support each other with their plane front ends (39, 40) against one another or against the power transmission element (14), sometimes by means of a friction-reducing separator.

6. The differential gear as set forth in any one of Claims 3 to 5, characterized in that each guide and slide piece (24, 28) is supported with each V-shaped groove or wedge surface (26, 27) against the power transmission element (14) and by means of the pivot bearing (21, 31) against the corresponding front end of the rolling elements.

7. The differential gear as set forth in any one of Claims 3 through 6, characterized in that the outer cone (37, 47) of the pivot bearing (21, 31) is formed either on the guide piece (24 or 28) or on the rolling element (22 or 40).

8. The differential gear as set forth in any one of the preceding claims, characterized in that the shape of the rolling elements is rotation-symmetrical, i.e., barrel-shaped, cylindrical or the like, and the cam track plates are correspondingly designed.

9. The differential gear as set forth in any one of the preceding claims, characterized in that the cam tracks (30, 32) on both cam track plates (16, 18) are formed as two consecutive sinusoids and on each plate (16, 18) the inner track is phase-displaced, e. g. 45°, from the outer track.

10. The differential gear as set forth in any one of Claims 1 through 8, characterized in that the cam tracks on both cam track plates (16, 18) are designed as two consecutive sinusoids which are not phase-displaced, the rolling elements rolling on the inner and on the outer cam track having an angular distance of 45° relative to each other.

11. The differential gear as set forth in any one of the preceding claims, characterized in that a total of four, or any other number (20, 22), rolling elements are arranged on each cam track or in the power transmission element and their axis of rotation is staggered 90°, or a different angle, in relation to each other.

12. Use of one or more differential gears as set forth in any one of the preceding claims in a speed-change or speed-increasing/speed-reducing gear.

## Revendications

1. Transmission différentielle avec un élément de transmission de force, par exemple une roue en couronne (14, figure 1), qui répartit le mouvement de rotation provenant du moteur d'entraînement, par l'intermédiaire d'une liaison de transmission, entre deux axes, avec deux plateaux à voie de came mutuellement opposés axialement (16, 18, figure 1), qui sont agencés coaxialement par rapport à l'élément de transmission de force et à rotation par rapport à celui-ci, tout en étant relié aux axes (2, 4, figure 1), chaque plateau à voie de came (16, 18) présentant sur les surfaces mutuellement opposées, au moins une voie de came qui présente une hauteur variable répartie sur la périphérie telle que considérée dans le sens axial, et avec au moins deux corps de roulement roulants (20, 22, figure 1) par voie de came (30, 32) et deux plateaux à voie de came (16, 18), qui sont chacun disposés dans un évidement dans l'élément de transmission de force, par exemple la roue à couronne (14), l'axe de rotation de chaque corps de roulement s'étendant radialement par rapport à l'élément de transmission de force et chaque corps de roulement étant simultanément mobile transversalement par rapport à son axe de rotation, caractérisée en ce que les corps de roulement sont reliés au moyen d'un élément de support en rotation (pièces de guidage et de glissement 24, 28) mobile perpendiculairement par rapport au plan de rotation de l'élément de transmission de force (14), à l'élément de transmission de force (14).

2. Transmission différentielle suivant la revendication 1, caractérisée en ce que les deux plateaux à voie de came mutuellement opposés axialement (16, 18, figure 1) sont de réalisation identique et sur les surfaces dirigées l'une vers l'autre des plateaux à voie de came sont prévues au moins une voie de came interne (30) et une externe (32).

3. Transmission différentielle suivant la revendication 1 ou 2, caractérisée en ce qu'une face frontale (39, 40), de chaque corps de roulement (22, 20) est plane, tandis que la face frontale opposée coopère avec une pièce de guidage et de glissement (24, 28), qui constitue aussi bien un guidage rectiligne (23, 19, figure 2) qu'un support en rotation (21, 31) des corps de roulement (22, 20).

4. Transmission différentielle suivant la revendication 3, caractérisée en ce que chaque guide rectiligne (19, 23) est réalisé en tant que surface de rainure ou de coin en forme de V (27, 26) et chaque support en rotation (31, 21) présente un cône interne (48, 38) et un cône externe (47, 37).

5. Transmission différentielle suivant l'une des revendications 3 à 4, caractérisée en ce que les deux corps de roulement (22, 20) s'appuient par leurs faces frontales planes (39, 40) l'un contre l'autre ou contre l'élément de transmission de force (14), éventuellement par l'intermédiaire d'une épaisseur interposée réduisant la friction.

6. Transmission différentielle suivant l'une des revendications 3 à 5, caractérisée en ce que chaque pièce de guidage et de glissement (24, 28) s'appuie avec chaque surface de rainure ou de coin en forme de V (26, 27) contre l'élément de transmission de force (14) et, par l'intermédiaire du support en rotation (21, 31), contre la face frontale correspondante des corps de roulement.

7. Transmission différentielle suivant l'une des revendications 3 à 6, caractérisée en ce que le cône externe (37, 47) du support en rotation (21, 31) est réalisé soit sur la pièce de guidage (24, 38), soit sur le corps de roulement (22 ou 40).

8. Transmission différentielle suivant l'une des revendications précédentes, caractérisée en ce que la forme des corps de roulement est symétrique en rotation, c'est-à-dire en forme de tonneau, cylindrique ou analogue et les plateaux à voie de came sont réalisés de façon correspondante en section transversale.

9. Transmission différentielle suivant l'une des revendications précédentes, caractérisée en ce que les voies de came (30, 32) sur les deux plateaux à voie de came (16, 18) sont conçues à la façon de deux courbes sinusoïdales successives et sur chaque plateau (16, 18), la voie interne est déphasée par rapport à la voie externe, par exemple de 45°.

10. Transmission différentielle suivant l'une des revendications 1 à 8, caractérisée en ce que les voies de came sur les deux plateaux à voie de came (16, 18) sont conçues à la façon de deux courbes sinusoïdales successives, qui ne sont pas déphasées, les corps de roulement roulant sur les voies de came interne et externe présentant alors un écart angulaire mutuel, par exemple de 45°.

11. Transmission différentielle suivant l'une des revendications précédentes, caractérisée en ce qu'au total quatre corps de roulement ou un autre nombre quelconque (20, 22) sont agencés sur chaque voie de came ou dans l'élément de transmission de force et leurs axes de rotation sont décalés mutuellement de 90° ou d'un autre angle.

12. Utilisation d'une ou plusieurs transmissions différentielles suivant l'une des revendications précédentes, dans une transmission de commande et de démultiplication/multiplication.

Fig.1

Fig.2

Fig. 2a

Fig. 3

Innenbahn

20

0°  45°  90°  135°  180°  225°  270°  315°  360°/0°

22

45°  0°/360°  45°  90°  135°  180°  225°  270°  315°

Aussenbahn

0 066 122

Axiale Höhe der Nockenbahnen

Drehwinkel der Nockenbahnteller

Fig. 4

Fig. 5

Fig. 5a

Fig. 6

Fig. 7